# EUROPEAN PATENT SPECIFICATION

(11) **EP 0 961 818 B1**
(45) Date of publication and mention of the grant of the patent: **27.06.2001**
(21) Application number: 98903532.4
(22) Date of filing: 20.01.1998
(51) Int. Cl.: C09J 7/04

(54) **PRINTABLE LINERLESS LABELS**
BEDRUCKBARE TRÄGERBANDLOSEN ETIKETTEN
ETIQUETTES IMPRIMABLES SANS DOUBLURE

(30) Priority: 04.02.1997 US 795321
(43) Date of publication of application: 08.12.1999
(73) Proprietor: MOORE BUSINESS FORMS, INC., Grand Island New York 14072-1697 (US)
(72) Inventor: RUSS, Timothy, J., Niagara Falls, NY 14304 (US)
(74) Representative: Spence, Anne
(86) International application number: US9800883
(87) International publication number: WO9833859

(56) References cited:
- DE-A- 1 619 254
- US-A- 5 496 635

## Description

Linerless labels, particularly those having repositional or removable adhesive, are typically sold in a roll configuration and are highly successful products. However in the past there have been problems with delamination peel after manufacture into a roll product. Some linerless labels have so high a rate of delamination peel that the labels cannot be properly unwound, while other labels even if they could be unwound cause significant converting problems resulting in high waste rates, low productivity, and requiring reruns.

According to the present invention it has been recognized that problems associated with the manufacture of conventional linerless labels in roll form have not had as effective a release coat as is necessary. According to the present invention it was found desirable to improve the properties of the release coat, but at the same time it is necessary to ensure that the release coat can be written on with at least one of a conventional ink pen or a felt tip marker, depending upon the customer application.

According to the present invention the problem with prior art linerless labels was solved by utilizing a chemical that was heretofore primarily used as a UV silicone additive to impart hardness to other easy release silicones. This additive, preferably the version sold by Th. Goldschmidt AG under the trademark "TEGO RC 711" is used substantially full strength and has an increased photoinitiator component (increased compared to conventional silicone release materials). When used with proper coating weight and paper combinations it is possible to provide -- according to the present invention -- a linerless label with the proper release level while still exhibiting pen and felt tip marker receptivity.

According to one aspect of the present invention a linerless label is provided comprising the following components: A paper substrate having first and second faces. A pressure sensitive adhesive substantially covering the second face. And, a release coating substantially covering the first face and having pen or felt tip marker receptivity; the release coating comprising at least about 90% by weight, at about 100% concentration, of a UV radiation curable silicone and at least 2% by weight photoinitiator, and a coat weight of at least about 10 grams per square meter.

When pen receptivity is particularly important, the release coating comprises between about 96-97% (most preferably about 96.5%) radiation curable silicone, having less than 1% volatiles content, at about 100% concentration, and between about 3-4% (most preferably about 3.5%) conventional photoinitiator. A coat weight of between about 25-35 grams per square meter is also provided. The adhesive typically comprises pressure sensitive repositional adhesive, although removable adhesive or even in some circumstances permanent adhesive, may be provided. The paper substrate may comprise all-purpose litho paper coated either one side or two side, or OCR bond. The paper typically has a weight between about 50-70 lbs. per 3,000 square feet (most preferably about 60 lb. per 3,000 square feet).

Where felt tip marker receptivity is particularly important, the release coating preferably comprises between about 94-96% (most preferably about 95%) radiation curable silicone, having less than 1% volatiles content, at about 100% concentration, and between about 4-6% (most preferably about 5%) conventional photoinitiator. A coat weight of between about 10-20 grams per square meter is provided. The paper substrate may comprise all purpose litho paper coated one side with release coating applied to the uncoated side, or OCR bond. The paper typically has a weight between about 50-70 lbs. per 3,000 square feet (most preferably about 60 lb. per 3,000 square feet).

According to another aspect of the present invention a roll of linerless labels is provided comprising the following components: A web of OCR bond or all purpose litho paper having first and second faces. A pressure sensitive repositional adhesive substantially covering the second face. And, a release coating substantially covering the first face and having pen receptivity. The release coating comprises between about 96-97% UV radiation curable silicone, having less than 1% volatiles content, at about 100% concentration, and between about 3-4% photoinitiator, and a coat weight of between about 25-35 grams per square meter. The release coating preferably comprises about 96.5% radiation curable silicone and about 3.5% photoinitiator, and the paper preferably has a weight of about 60 lbs. per 3,000 square feet.

According to yet another aspect of the present invention a roll of linerless labels is provided comprising the following components: A web of OCR bond or all purpose litho paper having first and second faces. A pressure sensitive repositional adhesive substantially covering the second face. And, a release coating substantially covering the first face and having pen receptivity. The release coating comprises between about 94-96% UV radiation curable silicone, having less than 1% volatiles content, at about 100% concentration, and about 10-20 grams per square meter. The release coating preferably comprises about 95% radiation curable silicone and about 5% photoinitiator, and the web comprises about 60 lb. all-purpose litho paper coated either one side with a release coating applied to the uncoated side, or OCR bond.

It is the primary object of the present invention to provide linerless labels, particularly in roll configuration, that do not have the high delamination peel or converting problems that can be found in prior art linerless labels. This and other objects of the invention will become clear from an inspection of the detailed description of the invention and from the appended claims.

### BRIEF DESCRIPTION OF THE DRAWINGS

FIGURE 1 is a top perspective view of an exemplary web of linerless labels according to the present invention;
FIGURE 2 is a side view, greatly exaggerated in size for clarity of illustration, of a linerless label of FIGURE 1; and
FIGURE 3 is a side view of a roll of linerless labels according to the present invention.

### DETAILED DESCRIPTION OF THE DRAWINGS

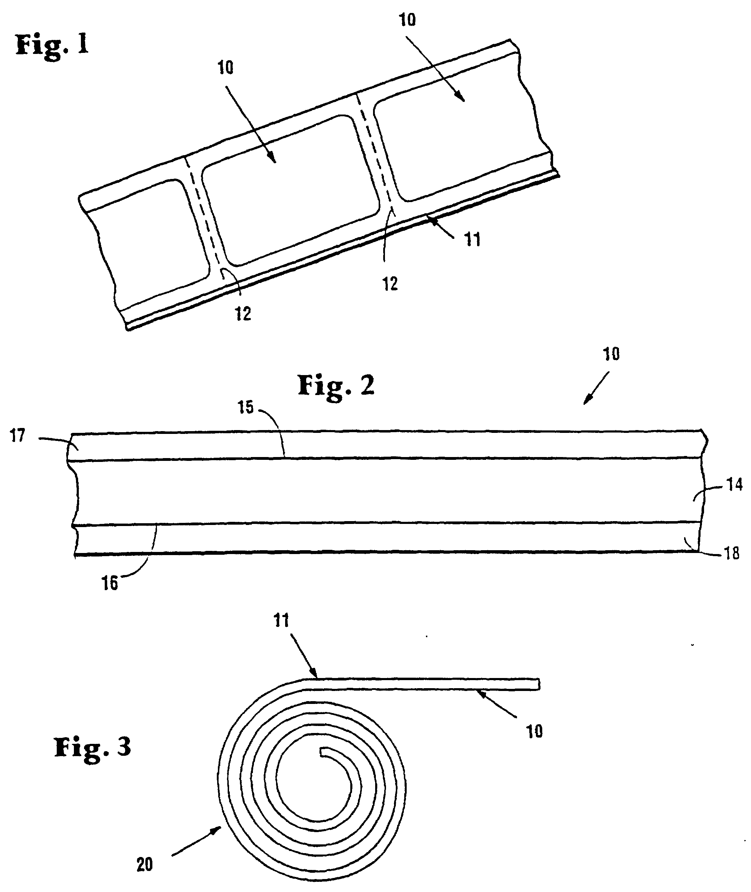

An exemplary linerless label 10 according to the present invention is illustrated in FIGURE 1, shown in a web 11 in association with other linerless labels 10. Each of the labels 10 may be die cut with other linerless labels 10. Each of the labels 10 may be die cut from the web 11, and lines of weakness, such as perforation lines 12, may be provided between the linerless labels 10. Alternatively the linerless labels 10 may be connected end-to-end to each other with lines of weakness between them and with no surrounding matrix, or other conventional configurations may be provided as are common in the trade.

In FIGURE 2 an exemplary linerless label 10 according to the present invention is illustrated in a form that is greatly exaggerated in size and relative dimensions for clarity of illustration. As is conventional the linerless label 10 includes a paper substrate 14 having first and second faces 15, 16, respectively, with a release coating 17 substantially covering the first face 15, and a pressure sensitive adhesive 18 substantially covering the second face 16. The pressure sensitive adhesive 18 preferably comprises a repositional adhesive, such as sold by Moore Business Forms, Inc. of Lake Forest, Illinois under the trademark "CLEANTAC®", but other pressure sensitive adhesives, including removable adhesives, or even permanent adhesives, may be provided.

What has heretofore been described is conventional per se in the linerless label art. What is unique according to the present is the particular release coating 17 that is provided, as well as the particular weight and type of the paper substrate 14 preferably utilized therewith, and the coating 17 weight. Prior art linerless labels with repositional adhesive which used conventionally easy release silicone coatings, such as curable by exposure to ultraviolet (UV) radiation, have had high delamination peel, and/or converting problems resulting in high waste rates, low productivity, and the like. This is solved according to the present invention by utilizing as a release coating 17 a UV radiation curable silicone which is normally used to impart hardness to other easy release silicones. Rather than merely used as an additive, however, it is used straight, that is at about 100% concentration. The release coating comprises at least about 90% by weight of this UV radiation curable silicone and at least about 2% by weight photoinitiator, and a coat weight of at least about 10 grams per square meter (e.g. 10-50 gm/m³).

While different UV radiation curable silicones may be utilized, the preferred silicone for coating 17 according to the present invention is sold by Th. Goldschmidt AG under the trademark TEGO RC 711. This product is a substantially solvent-free product (having a volatiles content of less than 1%) that can be cured by either electron beam or UV radiation, with a suitable photoinitiator being necessary for the UV curable version which is preferred according to the invention. It has a viscosity at 25°C of approximately 500 mPas, and a specific gravity at about 25°C of approximately 1.0 g/cm³, and a flash point of greater than 100°C. While a wide variety of suitable photoinitiators are available, a particularly desirable one according to the present invention is Darocure 1173 photoinitiator.

Where pen receptivity of the coating 17 is particularly important, the coating 17 preferably comprises between about 96-97% (most preferably about 96.5%) by weight radiation curable silicone at about 100% concentration, and between about 3-4% (preferably about 3.5%) by weight photoinitiator. A coat weight of the coating 17 of between about 25-35 grams per square meter is appropriate. For this pen receptivity embodiment the desirable paper substrate 14 comprises all-purpose litho paper coated either one side or two side, or OCR bond. The paper weight that is most desirable is between about 50-70 lbs. per 3,000 square feet, most preferably about 60 lbs.

Where felt tip marker receptivity is particularly important, the release coating 17 according to the invention preferably comprises about 94-96% (most preferably about 95%) radiation curable silicone at about 100% concentration, and between about 4-6% (preferably about 5%) photoinitiator, with a coat weight of between about 10-20 grams per square meter. In this embodiment the paper substrate 14 may comprise all-purpose litho paper coated on one side with the release coating 17 applied to the uncoated side (that is the face 15 of the substrate 14 will be uncoated), or the substrate 14 may comprise OCR bond. Again the paper weight is preferably between about 50-70 (most preferably about 60) lbs. per 3,000 square feet.

In all cases the preferred adhesive 18 is repositional adhesive, such as the Moore Business Forms, Inc. CLEANTAC® adhesive.

The linerless label web 11 according to the present invention preferably is in a roll configuration 20 as illustrated in FIGURE 3. The linerless labels 10 according to the present invention may be taken off the roll 20 without the high delamination peel or converting problems present in the prior art, yet the release coating 17 surface has pen and/or felt tip marker receptivity.

While the invention has been shown and described in what presently conceived to be the most practical and preferred embodiment thereof it will be apparent to those of ordinary skill in the art that many modifications may be made thereof within the scope of the invention. For example while the coatings 17, 18 are shown in FIGURE 2 to be applied directly to the faces 15, 16, where desired one or more intermediate coatings (e.g. tie coats) may be provided, such as to provide higher adhesion between the coatings and the substrate 14, such as shown in U.S. patent 5,354,588. Other modifications are also possible, thus the invention is to be accorded the broadest interpretation of the appended claims so as to encompass all equivalent structures and products.

## Claims

1. A linerless label (10) comprising:
a paper substrate (14) having first and second faces (15, 16);
a pressure sensitive adhesive (18) substantially covering said second face (16); and
a release coating (17) substantially covering said first face (15) and having pen or felt tip marker receptivity; said release coating comprising at least about 90% by weight, at about 100% concentration, of a UV radiation curable silicone and at least 2% by weight photoinitiator, and a coat weight of at least about 10 grams per square meter.

2. A linerless label as recited in claim 1 characterised in that said release coating (17) comprises between about 96-97% radiation curable silicone, having less than 1% volatiles content, at about 100% concentration, and between about 3-4% photoinitiator, and a coat weight of between about 25-35 grams per square meter, and has pen receptivity.

3. A linerless label as recited in claim 2 characterised in that said release coating (17) comprises about 96.5% radiation curable silicone and about 3.5% photoinitiator.

4. A linerless label as recited in claim 1 characterised in that said release coating (17) comprises between about 94-96% radiation curable silicone, having less than 1% volatiles content, at about 100% concentration, and between 4-6% photoinitiator, and a coat weight of between about 10-20 grams per square meter, and has felt tip marker receptivity.

5. A linerless label as recited in claim 4 characterised in that said release coating (17) comprises about 95% radiation curable silicone, and about 5% photoinitiator.

6. A linerless label as recited in any of claims 1 to 5 characterised in that said paper substrate (14) comprises all purpose litho paper coated either one side or two sides, or OCR bond.

7. A linerless label as recited in claim 6 characterised in that said paper has a weight of about 50 =-70 pounds per 3,000 square feet.

8. A linerless label as recited in any of claims 1 to 7 characterised in that said adhesive comprises pressure sensitive repositional adhesive.

9. A linerless label as recited in any of claims 1 to 8 characterised in that said paper substrate (17) comprises all purpose litho paper coated one side with said release coating and having adhesive applied to said uncoated side of said all purpose litho paper, or OCR bond.

10. A linerless label as recited in any of claims 1 to 10 disposed in a web of labels, said web in a roll configuration.

## Patentansprüche

1. Trägerbandloses Etikett (10), enthaltend:
einen Papierträger (14) mit einer ersten und einer zweiten Seite (15, 16);
einem die zweite Seite (16) im wesentlichen bedeckenden Haftklebstoff (18) und
einer die erste Seite (15) im wesentlichen bedeckenden, mit Kugelschreiber oder Filzstift beschriftbaren Trennschicht (17), die mindestens 90 Gew.-%, bei einer Konzentration von etwa 100%, eines UV-strahlungshärtbaren Silicons und mindestens 2 Gew.-% Photoinitiator enthält und ein Auftragsgewicht von mindestens etwa 10 Gramm pro Quadratmeter aufweist.

2. Trägerbandloses Etikett nach Anspruch 1, dadurch gekennzeichnet, daß die Trennschicht (17) zwischen etwa 96-97% strahlungshärtbares Silicon mit einem flüchtigen Anteil von weniger als 1%, bei einer Konzentration von etwa 100%, und zwischen 3-4% Photoinitiator enthält, ein Auftragsgewicht zwischen etwa 25-35 Gramm pro Quadratmeter aufweist und mit Kugelschreiber beschriftbar ist.

3. Trägerbandloses Etikett nach Anspruch 2, dadurch gekennzeichnet, daß die Trennschicht (17) etwa 96,5% strahlungshärtbares Silicon und etwa 3,5% Photoinitiator enthält.

4. Trägerbandloses Etikett nach Anspruch 1, dadurch gekennzeichnet, daß die Trennschicht (17) zwischen etwa 94-96% strahlungshärtbares Silicon mit einem flüchtigen Anteil von weniger als 1%, bei einer Konzentration von etwa 100%, und zwischen 4-6% Photoinitiator enthält, ein Auftragsgewicht zwischen etwa 10-20 Gramm pro Quadratmeter aufweist und mit Filzstift beschriftbar ist.

5. Trägerbandloses Etikett nach Anspruch 4, dadurch gekennzeichnet, daß die Trennschicht (17) etwa 95% strahlungshärtbares Silicon und etwa 5% Photoinitiator enthält.

6. Trägerbandloses Etikett nach einem der Ansprüche 1 bis 5, dadurch gekennzeichnet, daß es sich bei dem Papierträger (14) um ein- oder beidseitig beschichtetes Allzweck-Lithographiepapier oder um Belegleserpapier handelt.

7. Trägerbandloses Etikett nach Anspruch 6, dadurch gekennzeichnet, daß das Papier ein Gewicht von etwa 50 bis 70 Pounds pro 3000 Quadratfuß aufweist.

8. Trägerbandloses Etikett nach einem der Ansprüche 1 bis 7, dadurch gekennzeichnet, daß es sich bei dem Klebstoff um wiederlösbaren Haftklebstoff handelt.

9. Trägerbandloses Etikett nach einem der Ansprüche 1 bis 8, dadurch gekennzeichnet, daß es sich bei dem Papierträger (14) um Allzweck-Lithographiepapier, das einseitig mit der Trennschicht beschichtet ist und auf dessen unbeschichete Seite Klebstoff aufgetragen ist, oder um Belegleserpapier handelt.

10. Trägerbandloses Etikett nach einem der Ansprüche 1 bis 9, das in einer Etikettenbahn angeordnet ist, welche Rollenkonfiguration aufweist.

## Revendications

1. Etiquette sans doublure (10) comprenant :
un substrat de papier (14) ayant une première et une seconde faces (15,16);
un adhésif sensible à la pression (18) recouvrant sensiblement ladite seconde face (16); et
un revêtement antiadhésif (17) recouvrant sensiblement ladite première face (15) et ayant une réceptivité à la plume ou au marqueur à pointe de feutre; ledit revêtement antiadhésif comprenant au moins environ 90% en poids, à environ 100% de concentration, d'une silicone durcissable sous l'effet de rayons UV et au moins 2% en poids d'un photo-initiateur, et un poids de couche d'au moins environ 10 grammes par mètre carré.

2. Etiquette sans doublure selon la revendication 1, caractérisée en ce que ledit revêtement antiadhésif (17) comprend entre environ 96 et 97% d'une silicone durcissable sous l'effet de rayons, ayant une teneur de moins de 1% de corps volatils, à environ 100% de concentration, et entre environ 3 et 4% d'un photo-initiateur, et un poids de couche entre environ 25 et 35 grammes par mètre carré, et a une réceptivité à la plume.

3. Etiquette sans doublure selon la revendication 2, caractérisée en ce que ledit revêtement antiadhésif (17) comprend environ 96,5% d'une silicone durcissable sous l'effet de rayons et environ 3,5% d'un photo-initiateur.

4. Etiquette sans doublure selon la revendication 1, caractérisée en ce que ledit revêtement antiadhésif (17) comprend entre environ 94 et 96% d'une silicone durcissable sous l'effet de rayons, ayant une teneur de moins de 1% de corps volatils, à environ 100% de concentration, et entre 4 et 6% d'un photo-initiateur, et un poids de couche entre environ 10 et 20 grammes par mètre carré, et a une réceptivité au marqueur à pointe de feutre.

5. Etiquette sans doublure selon la revendication 4, caractérisée en ce que ledit revêtement antiadhésif (17) comprend environ 95% d'une silicone durcissable sous l'effet de rayons et environ 5% d'un photo-initiateur.

6. Etiquette sans doublure selon l'une quelconque des revendications 1 à 5, caractérisée en ce que ledit substrat de papier (14) comprend un papier lithographique tous usages couché sur une ou deux faces, ou un papier bond OCR.

7. Etiquette sans doublure selon la revendication 6, caractérisée en ce que ledit papier a un poids d'environ 81,4 g/cm²-113,9 g/m² (50-70 livres par 3000 pieds carrés).

8. Etiquette sans doublure selon l'une quelconque des revendications 1 à 7, caractérisée en ce que ledit adhésif comprend un adhésif de repositionnement sensible à la pression.

9. Etiquette sans doublure selon l'une quelconque des revendications 1 à 8, caractérisée en ce que ledit substrat de papier (14) comprend un papier lithographique tous usages couché sur une face avec ledit revêtement antiadhésif et ayant un adhésif appliqué sur ladite face non revêtue dudit papier lithographique tous usages, ou un papier bond OCR.

10. Etiquette sans doublure selon l'une quelconque des revendications 1 à 9 disposée dans une bande d'étiquettes, ladite bande ayant une configuration en rouleau.
